# EUROPÄISCHE PATENTSCHRIFT

(11) **EP 0 814 933 B1**
(45) Veröffentlichungstag und Bekanntmachung des Hinweises auf die Patenterteilung: **15.12.1999**
(21) Anmeldenummer: 96904829.7
(22) Anmeldetag: 21.02.1996
(51) Int. Cl.: B23D 51/02, B23D 51/10, B23B 31/113

(54) **STICHSÄGEHUBSTANGENFÜHRUNGS- UND SÄGEBLATTSPANNVORRICHTUNG**
COMPASS SAW
DISPOSITIF DE GUIDAGE DE BARRES DE LEVAGE D'UNE SCIE A GUICHET ET DISPOSITIF DE TENSION DE LAMES DE SCIE

(30) Priorität: 16.03.1995 DE 19509544
(43) Veröffentlichungstag der Anmeldung: 07.01.1998
(73) Patentinhaber: SCINTILLA AG, CH-4501 Solothurn (CH)
(72) Erfinder: DI NICOLANTONIO, Aldo, CH-4565 Recherswil (CH)
(74) Vertreter: Wierspecker, Horst
(86) Internationale Anmeldenummer: EP9600701
(87) Internationale Veröffentlichungsnummer: WO9628273

(56) Entgegenhaltungen:
- EP-A- 0 544 129
- EP-A- 0 623 413
- DE-A- 4 102 011
- DE-A- 4 313 718
- US-A- 2 703 716
- US-A- 3 663 028
- US-A- 3 665 983
- US-A- 3 750 283
- US-A- 4 299 402

## Beschreibung

### Stand der Technik

Die Erfindung geht aus von einer Stichsäge nach der Gattung des Anspruchs 1.

Es ist bereits aus der DE-OS 41 02 011 eine Stichsäge bekannt, deren Hubstange an ihrem unteren Ende das Sägeblatteinspannende eines Sägeblatts mit zwei einander gegenüberliegenden, quer zur Sägeblattlängsachse verlaufenden Nasen aufnimmt. Das Sägeblatteinspannende wird bis zum stirnseitigen Anschlagen der Nasen am unteren Hubstangenende in axialer Richtung in die Hubstange eingeführt.

Im Inneren des Hubstangenendes ist ein Zentrierschlitz zur Aufnahme der Sägeblätter angeordnet. Dieser ist optimal nur zum Zentrieren von Sägeblättern einer einzigen bestimmten Stärke geeignet. Da eine Vielzahl von Sägeblättern mit unterschiedlichen Stärken für die unterschiedlichsten Einsatzzwecke existieren, müssen Stichsägen im Interesse einer universellen Verwendbarkeit möglichst alle Sägeblattypen, d.h. Sägeblätter jeder Stärke, aufnehmen können.

Der Zentrierschlitz zur Aufnahme der Sägeblattnasen ist daher so breit, daß auch das stärkste Sägeblatt hineinpaßt. Dadurch haben Sägeblätter mit geringerer Stärke ein gewisses seitliches Spiel im Zentrierschlitz. Durch dieses Spiel des Einspannendes besteht für die biege- und verwindungsempfindlichen Sägeblätter geringerer Stärke die Gefahr von Torsions- und Flatterbewegungen des Sägeblatts. Dies beeinträchtigt die Qualität des Schnittverlaufs beim Sägen.

Gemäß US 3 750 283 ist eine Stichsäge bekannt, deren Spanneinrichtung für die Sägeblätter die Nasen stirnseitig in V-förmigen Nuten und das freie Ende des Einspannendes in einer Konusbohrung zentriert halten. Dadurch erhält das Sägeblatt unabhängig von seiner Stärke einen festen Sitz. Die Einrichtung zum Spannen von Sägeblättern arbeitet sicher und zuverlässig. Sie umgreift die Hubstange mit einer Spannhülse und Feder. Dadurch besteht jedoch der Nachteil, daß der untere Durchmesserbereich des Hubstangenendes gegenüber dem oberen Hubstangenende stufenartig vergrößert ist. Dadurch wird die Sicht des Bedienenden auf die Schneide des Sägeblatts beim Arbeiten mit der Stichsäge behindert. Außerdem ist diese Sägeblattspanneinrichtung Staub und Spänen ausgesetzt, so daß es durch Verschmutzung zum Klemmen und zum erschwerten Lösen der Spanneinrichtung bzw. zum erschwerten Sägeblattwechsel kommen kann.

### Vorteile der Erfindung

Die erfindungsgemäße Stichsäge mit dem kennzeichnenden Merkmal des Anspruchs 1 hat demgegenüber den Vorteil, daß Sägeblätter aller Stärken mit übereinstimmend hoher Spannqualität einspannbar sind. Demzufolge sind unabhängig von der Stärke der Sägeblätter mittels dieser Spanneinrichtung übereinstimmend gute Arbeitsergebnisse mit der Stichsäge erreichbar.

Außerdem hat die erfindungsgemäße Stichsäge den Vorteil, daß für die Hubstange ein sehr großer Lagerabstand zwischen dem oberen Hubstangenlager und dem unteren Hubstangenlager gewählt werden kann, wobei das untere Hubstangenlager die Einrichtung zum Spannen des Sägeblatts umgreift. Dadurch führt die Einrichtung zum Spannen des Sägeblatts mittelbar die Hubstange.

Daraus folgt der Vorteil, daß die Schnittstelle zwischen der Hubstange und der Einrichtung zum Spannen des Sägeblatts ins Innere des Getriebegehäuses versetzt und gegen Staub und Späne geschützt ist und außerdem durch das Getriebefett geschmiert wird.

Dadurch kann die Drehfeder zum Spannen der Spannhülse außen um die Spannhülse herumgeführt angeordnet werden, anstatt im Inneren der Hubstange. Dadurch wird die Funktion der Drehfeder durch eine eventuell zu eng ansetzende Spannhülse nicht beeinträchtigt.

### Zeichnung

Ausführungsbeispiele der vorliegenden Erfindung sind in der nachfolgenden Beschreibung anhand der zugehörigen Zeichnung näher erläutert.

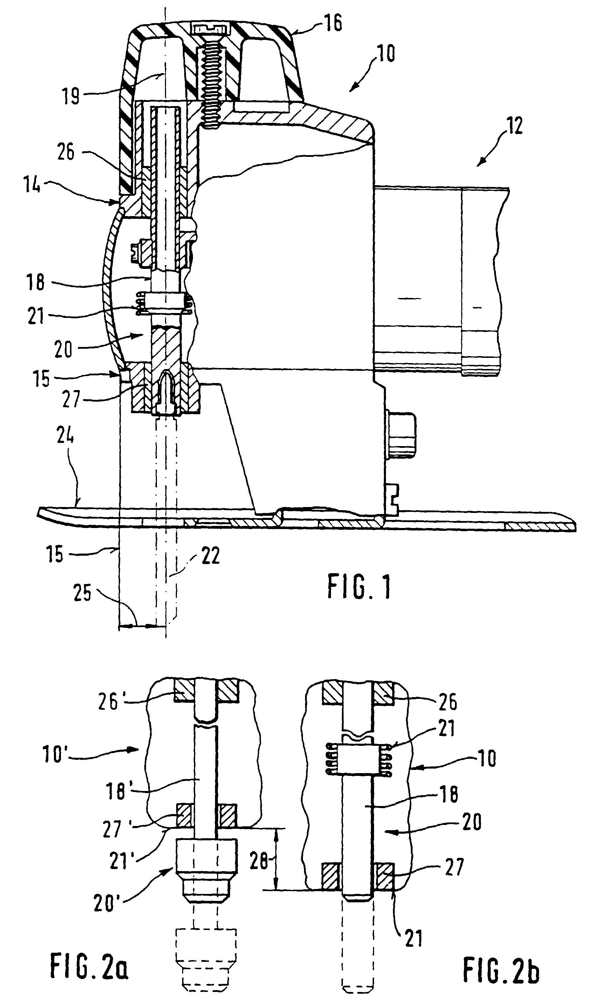

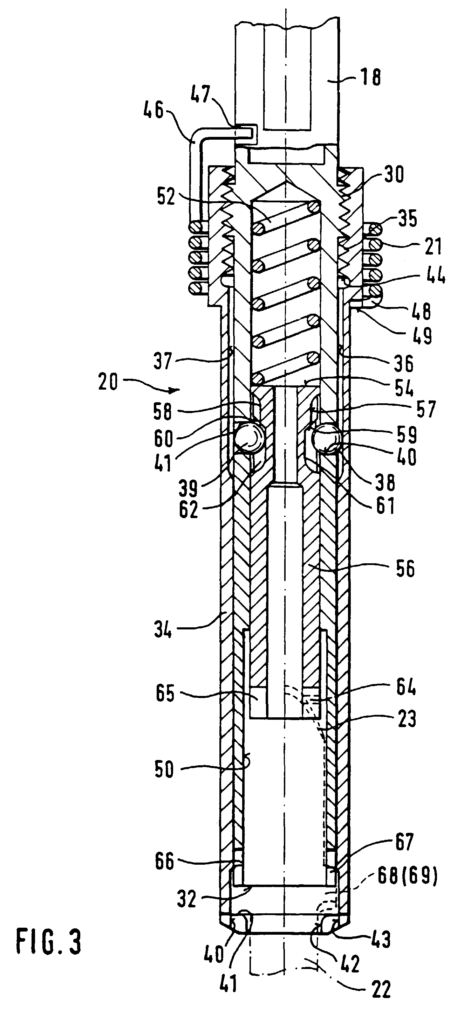

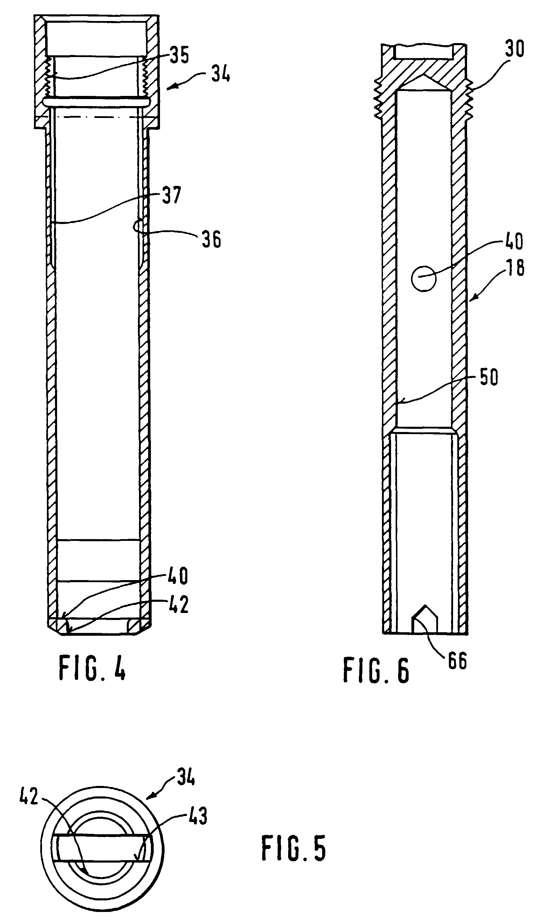

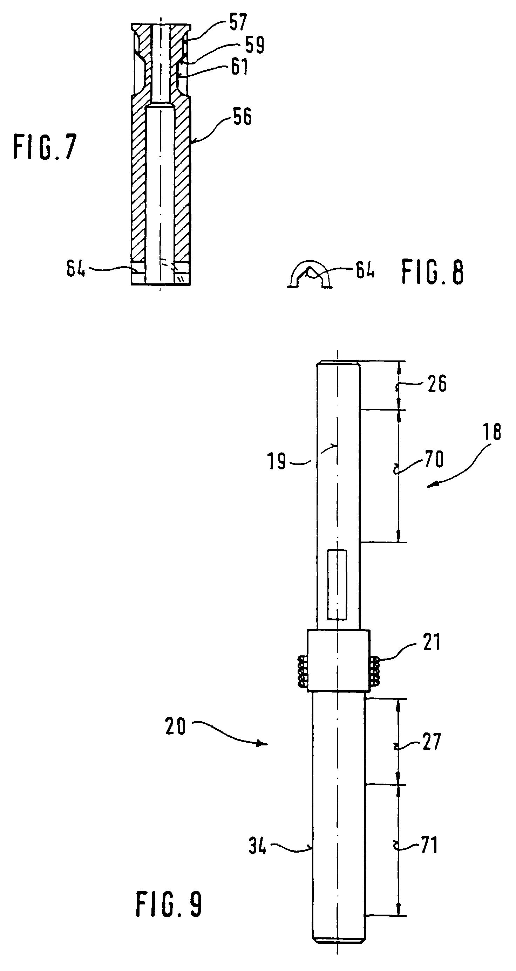

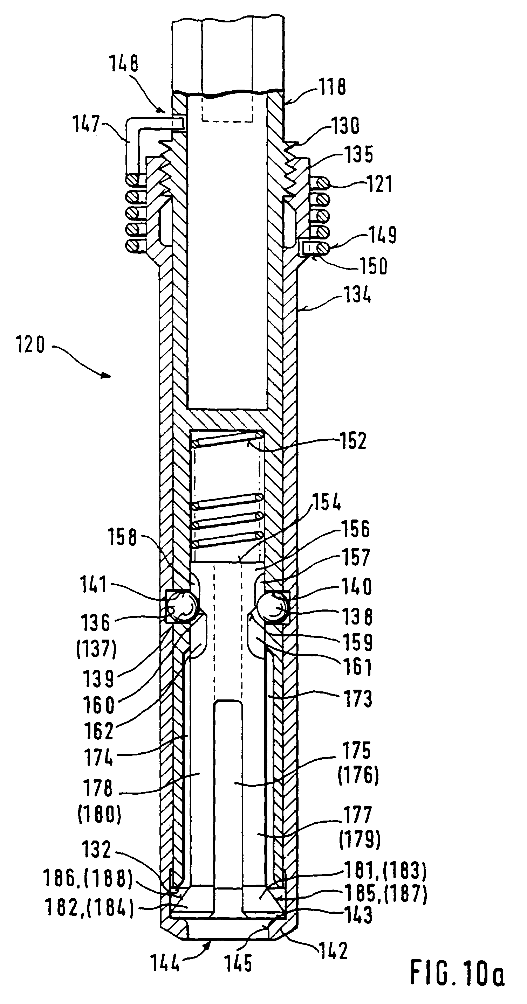

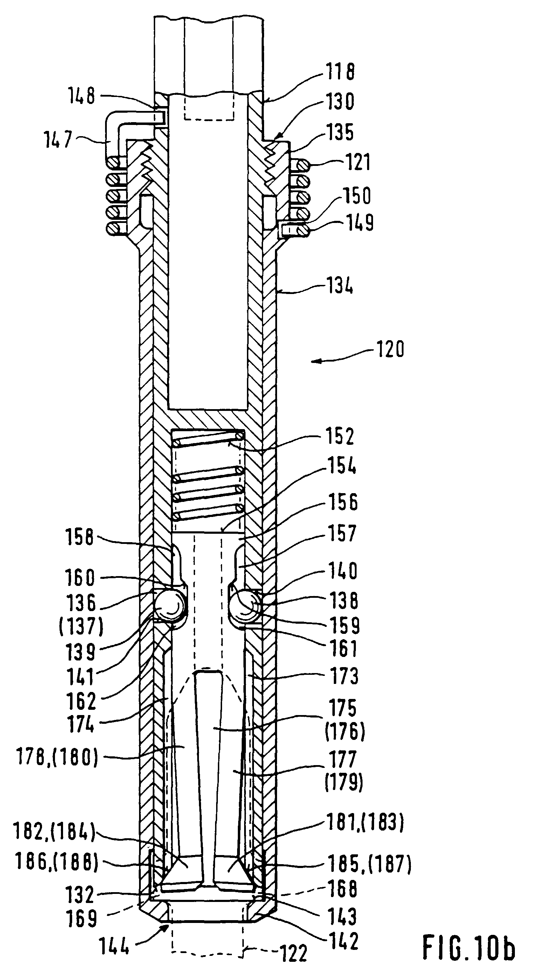

Es zeigen Figur 1 den Längsschnitt einer erfindungsgemäßen Stichsäge, Figur 2a einen schematischen Querschnitt der Hubstangenlagerung einer Stichsäge nach dem Stand der Technik, Figur 2b einen schematischen Querschnitt der Hubstangenlagerung einer erfindungsgemäßen Stichsäge, die Figur 3 ein Ausführungsbeispiel der erfindungsgemäßen Spanneinrichtung, Figur 4 die Spannhülse gemäß Figur 3 im Längsschnitt, Figur 5 die Ansicht der Spannhülse gemäß Figur 4 von unten, Figur 6 einen Längsschnitt des unteren Hubstangenbereichs gemäß Figur 3, Figur 7 einen Längsschnitt der Zentrierhülse gemäß Figur 3, Figur 8 die Einzelheit des Zentrierschlitzes als Seitenansicht gemäß Figur 7, Figur 9 eine Seitenansicht der Baugruppe aus Hubstange und Spanneinrichtung gemäß Figur 3, Figur 10 a eine Schnittdarstellung eines weiteren Ausführungsbeispiels der Spanneinrichtung in Löseposition und Figur 10 b die gleiche Spanneinrichtung in Spannposition.

### Beschreibung der Ausführungsbeispiele

Figur 1 zeigt einen Längsschnitt einer Stichsägemaschine 10 mit einem als Haupthandgriff dienenden Maschinengehäuse 12 und mit einem Getriebegehäuse 14. Am oberen Teil des Getriebegehäuses 14 ist ein knaufartiger Zusatzhandgriff 16 angeordnet, der zum sicheren Halten der Stichsägemaschine 10 dient.

Im vorderen Bereich des Getriebegehäuses 14 ist eine Hubstange 18 angeordnet mit einer strichpunktiert gezeichneten Hubstangenachse 19. Das im Inneren des Getriebegehäuses 14 positionierte untere Ende der Hubstange 18 trägt eine Spanneinrichtung 20 für das Sägeblatt 22, die von einer Drehfeder 21 umgeben und ebenfalls im Inneren des Getriebeghäuses 14 angeordnet ist. Das Maschinengehäuse 12 ist gemeinsam mit dem Getriebegehäuse 14 auf einer Grundplatte 24 verstellbar angeordnet.

Der mit der Bezugsziffer 25 bezeichnete Abstand zwischen der vorderen Stirnseite 15 des Getriebegehäuses 14 und der Hubstangenachse 19 ist bei dem vorliegenden Ausführungsbeispiel besonders klein.

Die Hubstange 18 ist in einem oberen und einem unteren Hubstangenlager 26, 27 geführt.

In den Figuren 2a, 2b ist je ein schematischer Längsschnitt des Hubstangenbereichs je einer Stichsägemaschine 10, 10' nebeneinander gezeigt. Die in Betrachtungsrichtung linke ist eine Stichsägemaschine 10' gemäß dem Stand der Technik, die in Betrachtungsrichtung rechte ist die erfindungsgemäße Stichsägemaschine 10.

Von den beiden Stichsägemaschinen 10, 10' sind die Hubstange 18, 18', das obere Hubstangenlager 26, 26', das untere Hubstangenlanger 27, 27' und die Spanneinrichtung 20, 20' erkennbar. Mit der Bezugsziffer 28 ist das Differenzmaß zwischen den Unterkanten 21, 21' der unteren Hubstangenlager 27, 27' bezeichnet bei auf gleicher Höhe angeordneten unteren Hubstangenenden.

Daraus ist erkennbar, daß bei der erfindungsgemäßen Stichsägemaschine 10 der Abstand zwischen oberem Hubstangenlager 26 und unterem Hubstangenlager 27 deutlich größer ist als der Abstand zwischen oberem 26' und unterem Hubstangenlager 27' bei der Stichsägemaschine 10' nach dem Stand der Technnik.

Die Vergrößerung dieses Abstandes 28 ist gemäß der Erfindung möglich durch die ins Innere des Getriebegehäuses 14 verlagerte Schnittstelle zwischen der Hubstange 18 und der Spanneinrichtung 20, wobei die Hubstange 18 außen durch die Drehfeder 21 umgriffen wird, ohne daß für diese ein gesondertes Gehäuse notwendig ist. Durch diese Anordnung ist eine besonders schlanke Bauweise der Spanneinrichtung 20 möglich. Die Spanneinrichtung 20 selbst kann dadurch im unteren Hubstangenlager 27 oszillierend geführt werden und in dieses eintauchen, wobei vorzugsweise die Schnittstelle zwischen der Spanneinrichtung 20 und der Hubstange 18 das Hubstangenlager 27 nicht durchquert.

In Figur 3 ist ein Längsschnitt der Spanneinrichtung 20 für das Sägeblatt 22 gezeigt. Die Hubstange 18 wird im oberen Bereich konzentrisch von einer Drehfeder 21 umgriffen. Die Hubstange 18 trägt dort einen Gewindebund 30 und erstreckt sich von diesem ausgehend axial rohrartig nach unten bis zu ihrer Stirnkante 32. Zwischen der Hubstange 18 und der Drehfeder 21 umgreift eine Spannhülse 34 konzentrisch mit einem Innengewindebereich 35 den Gewindebund 30 der Hubstange 18. Die Spannhülse 34 trägt innen im oberen Bereich auf gegenüberliegenden Seiten je eine Axialnut 36, 37. Diese dienen dem Eintritt von Rastkugeln 38, 39, die jeweils in einer Radialbohrung 40, 41 auf einander gegenüberliegenden Seiten der Hubstange 18 radial verschieblich angeordnet sind.

Die Spannhülse 34 erstreckt sich unterhalb des bundartig vergrößerten Innengewindebereichs 35 als außen glattes, durchgehendes Zylinderrohr. An ihrem freien Ende bildet die Spannhülse 34 einen radial nach innen gezogenen Kragen 40 mit einer oberen Stirnfläche 41 und einer Durchtrittsöffnung 42 zum Einführen und Spannen des Einspannendes 23 des Sägeblatts 22.

Die Spannhülse 34 trägt innen zwischen dem Innengewindebereich 35 und den Axialnuten 36, 37 einen umlaufenden Freistich 44. Außen wird die Spannhülse 34 von der Drehfeder 21 umgriffen, die mit ihrem oberen Federende 46 in einer Radialausnehmung 47 der Hubstange 18 eingreift und die mit ihrem unteren Federende 48 in einer Radialausnehmung 49 der Spannhülse 34 eingreift. Die Drehfeder 21 ist vorgespannt in der Weise, daß sie die Spannhülse 34 in ihre axial oberste Stellung gegenüber der Hubstange 18 zu bewegen sucht.

Die Hubstange 18 ist im Bereich zwischen dem Gewindebund 30 und der Stirnkante 32 ihres freien Endes im Inneren mit einer Stufenbohrung 50 versehen. Am Grund der Stufenbohrung 50 stützt sich einenends eine vorgespannte Druckfeder 52 ab, die sich anderenends gegen eine Stirnseite 54 eines kolbenartigen Zentrierstücks 56 stützt. Die Druckfeder 52 sucht das Zentrierstück 56 axial nach unten zu verschieben. Im oberen Bereich des Zentrierstücks 56 sind auf einander gegenüberliegenden. Seiten zwei Rastnuten 57, 58, die in Betrachtungsrichtung axial nach unten in eine Schrägfläche 59, 60 sowie in eine Tiefnut 61, 62 übergehen zum Eintritt der Rastkugeln 38, 39.

Das untere freie Ende des Zentrierstücks 56 trägt einen zentrischen, V-förmigen Zentrierschlitz 64, 65 zum Eintritt des äußersten Endes des Sägeblatteinspannendes 23.

Die Hubstange 18 trägt im Bereich ihrer Stirnkante 32 eine zentrische, V-förmige Zentrierausnehmung 66, 67 zum Zentrieren der Oberkante der Sägeblattnasen 68, 69 des Sägeblatteinspannendes 23.

Die Einrichtung 20 funktioniert folgendermaßen:
Zum Zweck des Sägeblattwechsels werden die Hubstange 18 und die Spannhülse 34 relativ zueinander verdreht. Dies kann dadurch geschehen, daß bei drehfest angeordneter oberer Hubstange 18 die Spannhülse 34 von Hand oder mit nicht dargestellten Hilfsmitteln entgegen der Kraft der Drehfeder 21 verdreht wird, wobei gleichzeitig eine Axialbewegung dieser Teile zueinander eintritt, so daß sich der Abstand zwischen der Stirnkante 32 der Hubstange 18 und der oberen Stirnfläche 41 des Kragens 40 vergrößert. Dabei wird der Radialschlitz 43 (Figur 5) so positioniert, daß er mit der Ebene des Sägeblatts 22 fluchtet.

In dieser Position kann das Sägeblatt 22 in axialer Richtung nach unten entnommen werden, wobei der Axialbewegung des Sägeblatts 22 das Zentrierstück 56, beaufschlagt durch die Druckfeder 52 folgt. Bei der Axialverschiebung des Zentrierstücks 56 kommen die Schrägflächen 59, 60 zur Anlage an die Rastkugeln 38, 39. Diese werden dadurch in den Radialbohrungen 40, 41 radial nach außen verschoben und beginnen in die Axialnuten 36, 37 der Spannhülse 34 einzutreten. Beim weiteren axialen Verschieben des Zentrierstücks 56 übergreifen die Rastnuten 57, 58 die Innenseiten der Rastkugeln 38, 39. Sie verhindern so deren radiale Bewegung nach innen bzw. drücken sie radial nach außen zur Anlage an den Grund der Axialnuten 36, 37. Dadurch wird die Spannhülse 34 gegenüber der Hubstange 18 gegen Zurückverdrehen in ihre Ausgangslage arretiert.

Im praktischen Einsatz folgen die beschriebenen Bewegungsabläufe so schnell aufeinander, daß in der Verdreh-Endstellung der Spannhülse 34 das Sägeblatt 22 ausgeworfen wird, wobei die Spannhülse 34 in dieser Position durch die Mechanik der Spanneinrichtung verriegelnd festgehalten wird. Der Bedienende kann die erfindungsgemäße Stichsäge 10 mit einer Hand halten und dabei mit der anderen Hand bequem, ohne Hilfswerkzeuge das Sägeblatt 22 entnehmen. Beim Einsetzen eines neuen Sägeblatts in die Spanneinrichtung 20 laufen die vorstehend beschriebenen Bewegungsabläufe in umgekehrter Reihenfolge ab. Hat das Sägeblatteinspannende 23 den Zentrierschlitz 64 des Zentrierstücks 56 erreicht, nimmt es bei weiterer axialer Verschiebung das Zentrierstück 56 axial mit. Die Tiefnuten 61, 62 erreichen dabei eine gegenüber den Rastkugeln 38, 39 fluchtende Position, so daß sich diese radial in diese hineinbewegen können, wobei sie aus den Rastnuten 57, 58 der Spannhülse 34 austreten bzw. durch Anlaufen der Nutwände herausgedrückt werden. Damit ist die - Verriegelung der Spannhülse 34 aufgehoben. Die Spannhülse 34 bewegt sich infolge der Vorspannkraft der Drehfeder 21 in ihre Ausgangsposition. Dadurch verdreht sich der Radialschlitz 43 im unteren Ende der Spannhülse 34 so, daß der Kragen 4o die Unterkanten der Sägeblatt-Nasen 68, 69 untergreift und damit das Sägeblatt 22 axial spannt und gegen Herausfallen aus der Spanneinrichtung 20 sichert. Daraus wird klar, daß beim Einsatz eines neuen Sägeblatts 22 die Spannhülse 34 selbst nicht betätigt werden muß, sondern daß sich das neu eingesetzte Sägeblatt 22 automatisch verriegelt.

In Figur 4 ist eine Schnittdarstellung der Spannhülse 34 gemäß Figur 1 gezeigt, wobei der Innengewindebereich 35 und die Axialnuten 36, 37, der Kragen 40 und die Durchtrittsöffnung 42 deutlich erkennbar sind.

In Figur 5 ist die Spannhülse 34 von unten gezeigt, wobei die Durchtrittsöffnung 42 und der Radialschlitz 43 deutlich erkennbar sind.

Die Durchtrittsöffnung 42 und der Radialschlitz 43 arbeiten mit dem Sägeblatteinspannende 23 zusammen, wie ein Schlüsseloch mit dem Schlüssel: Ist der Schlüssel im Schlüsselloch verdreht, kann er axial nicht entnommen werden.

In Figur 6 ist die Hubstange 18 gezeigt, wobei der Gewindebund 30, die Radialbohrung 40, die Stufenbohrung 50 und die Zentrierausnehmung 66, 67 deutlich erkennbar sind.

In Figur 7 ist eine Schnittdarstellung des Zentrierstücks 56 gezeigt, wobei die Ausgestaltung der Rastnut 57, die Schrägfläche 59 und die Tiefnut 61 sowie der Zentrierschlitz 64 deutlich wird.

In Figur 8 ist eine seitliche Ansicht eines Ausschnitts aus Figur 7 im Bereich des Zentrierschlitzes 64 gezeigt, wobei die V-Form des Zentrierschlitzes 64 deutlich wird.

Figur 9 zeigt die Hubstange 18 als bauliche Einheit gemeinsam mit der Einrichtung 20 zum Spannen des Sägeblatts 22, wobei der geringe Durchmesserunterschied zwischen der Hubstange 18 und der Spannhülse 34 deutlich wird. Außerdem sind die Längen der Hubstangenlager 26, 27 durch Maßpfeile in der oberen Totpunktlage der Hubstange 18 eingezeichnet. Die Hublänge ist durch Maßpfeile 70, 71 unterhalb der Hubstangenlager 26, 27 verdeutlicht.

Daraus wird im Zusammenhang mit den vorhergehendene Zeichnungen deutlich, daß das Sägeblatteinspannende 23 während des Hubes der Hubstange 18 durch das untere Hubstangenlager 13 hin- und herbewegt wird und daß damit das Abstützmoment im unteren Hubstangenlager 13 beim Sägen gegenüber den bekannten Lösungen verringert wird. Das Sägeblatt 22 ist besonders stabil gegen ungewollte Lageveränderung gespannt, wobei eine besonders steife Einheit zwischen der Hubstange 18 und dem Sägeblatt 22 entlang der Hubstangenachse 19 gebildet wird.

In den Figuren 10a, 10b ist ein weiteres Ausführungsbeispiel der Einrichtung 120 zum Spannen eines Sägeblatts 122 in der den vorher gezeigten Figuren entsprechenden schlanken Bauweise in zwei Funktions-Positionen gezeigt. Die Figur 10 a zeigt die Einrichtung 120 in der Freigabeposition für das Sägeblatt 122 bei in der axial untersten Position arretierter Spannhülse 134 und die Figur 10 b zeigt die Einrichtung 20 in der Spann-Position für das Sägeblatt 122 bei in der axial obersten Position gehaltener Spannhülse 134.

Eine Hubstange 118 trägt einen Gewindebund 130 und verläuft von diesem aus als außen glattes, zylindrisches Rohr bis zur unteren Stirnkante 132. In im unteren Bereich der Hubstange 118 angeordneten, Radialbohrungen 140, 141 sitzen Rastkugeln 138, 139.

Die Hubstange 118 wird von einer Spannhülse 134 konzentrisch umgriffen. Die Spannhülse 134 ist über ein Innengewindestück 135 mit dem Gewindebund 130 verschraubt und ist außen, unterhalb des bundartigen Innengewindestücks 135 als glattes Rohr ausgestaltet. Am freien Ende trägt die Spannhülse 134 einen radial nach innen gezogenen Kragen 142. Dieser weist innenseitig eine axiale Stützfläche 143 auf und sein radial innerer Rand bildet eine Durchtrittsöffnung 144 mit einem radialen Schlitz 145.

Zentrisch im Inneren der rohrartigen Hubstange 118 ist eine im wesentliche zylindrische Spannzange 156 axial verschiebbar angeordnet. Gegen deren obere Stirnseite 154 stützt sich eine Druckfeder 152 ab und sucht die Spannzange 156 axial nach unten zu schieben.

Die Spannzange 156 ist in axialen Führungsnuten 173, 174 in der Innenwand der Hubstange 118 drehfest verschiebbar geführt. Nahe der oberen Stirnseite 154 weist die Spannzange 156 auf gegenüberliegenden Seiten des Zylindermantels je eine radiale Rastnut 157, 158 auf. Deren Nutgrund geht in eine radial nach innen gerichtete Schrägfläche 159, 160 und in Tiefnuten 161, 162 über. Diese sind den jeweils benachbarten Radialbohrungen 140, 141 in der Hubstange 118 fluchtend gegenüber angeordnet.

Die Spannzange 156 weist zwei Querschlitze 175, 176 auf, die kreuzweise zueinander verlaufen und einander schneiden und auf diese Weise den unteren Bereich der Spannzange 156 in vier Spannbacken 177, 178, 179, 180 teilen.

Jede Spannbacke 177 bis 180 endet im unteren Bereich in einer Kegelglocke 181 bis 184 mit jeweils einer äußeren Kegelfläche 185 bis 188. Die Kegelflächen 185 bis 188 kommen beim Spannen der Spannzange 156 zur Anlage in die untere Stirnseite 132 der Hubstange 118, so daß sie bei einer weiteren Axialverschiebung radial bewegt werden, zum Spannen des Sägeblatts 122 gemäß Figur 10 b.

Das Innengewindestück 135 der Spannhülse 134 wird von einer Drehfeder 121 konzentrisch umgriffen, die mit ihrem oberen Ende 147 in eine Radialausnehmung 148 in der Hubstange 118 greift und mit ihrem unteren Ende 149 in eine Radialausnehmung 150 der Spannhülse 134 greift und vorgespannt ist.

Gemäß Figur 10 a ist die Spannzange 156 ist in der Freigabeposition gezeigt. Die Kegelglocken 181 bis 184 stützen sich in ihrer unteren Anschlagstellung an der Stirnfläche 143 des Kragens 142 ab.

Gemäß Figur 10 b sind die axial nach oben verschobenen Kegelglocken 181 bis 184 in der Spannposition mit Anlage an der Stirnkante 132 des freien Endes der Hubstange 118 maximal radial nach innen ausgelenkt. Dadurch verringert sich die Breite des Schlitzes 176 und die Innenseiten der Spannbacken 177 bis 180 stützen sich spannend an den Flachseiten des Einspannendes des Sägeblatts 122 ab.

Die Spannhülse 134 trägt benachbart zu den Radialbohrungen 140, 141 und zu diesen fluchtend jeweils eine Arretiernut 136, 137 zum Eintritt der Rastkugeln 138, 139 zu deren Verdreh-Verriegelung.

Folgende Funktionsabläufe ergeben sich beim Sägeblattwechsel der Einrichtung 120: Bei ruhendem Antrieb der Stichsäge wird die Spannhülse 134 gegenüber der Hubstange 118 so verdreht, daß sie sich entgegen der Vorspannkraft der Drehfeder 121 gegenüber der Hubstange 118 gemäß Figur 10 a axial nach unten bewegt. Dieser Axialverschiebung folgt das Sägeblatt 122, dessen Sägeblattnasen 168, 169 sich an der oberen Stirnfläche 143 des Kragens 142 abstützen. Dem Sägeblatt 122 folgt die Spannzange 156 infolge der Vorpannkraft durch die Druckfeder 152. Dabei bewegen sich die Spannbacken 77 bis 80 radial nach außen, während deren Kegelglocken 181 bis 184 an den Kegelflächen 185 bis 188 der Hubstange 118 abgleiten. Dadurch läßt die Spannwirkung auf das Sägeblatt 122 nach. Der Radialschlitz 145 in der Durchtrittsöffnung 144 des Kragens 152 kommt mit seiner Achse in die Ebene des Sägeblatts 122. Damit ist den Nasen 168, 169 der Weg nach außen freigegeben. Das Sägeblatt 122 kann in axialer Richtung entnommen werden.

Beim axialen Verschieben hat die Spannzange 156 mit ihren Schrägflächen 159, 160 die Rastkugeln 138, 139 radial nach außen in die Arretiernuten 136, 137 der Spannhülse 134 verstellt - gemäß Figur 10 a. Bei Verschieben der Spannzange 156 in die Freigabestellung übergreifen deren Rastnuten 157, 158 die Innenseiten der Rastkugeln 138, 139 und halten diese dadurch in ihrer Position in den Arretiernuten 136, 137 der Spannhülse 134 fest.

Dadurch ist in der Freigabestellung die Spannhülse 134 gegenüber der Hubstange 118 verriegelt. Die Spannhülse 134 ist daran gehindert, der Kraft der Drehfeder 122 zu folgen und sich in die axial oberste Position zurück zu bewegen. Dies ist nur dann möglich, wenn erneut ein Sägeblatt mit dem Sägeblatteinspannende 123 in die Durchtrittsöffnung 144 bzw. den Radialschlitz 145 in den Querschlitz 176 eingeführt wird. Sobald das Sägeblatteinspannende 123 mit seinem obersten freien Bereich am Ende des Zentrierschlitzes 176 anstößt, wird beim weiteren Einführen des Sägeblatts 122 die Spannzange 156 axial nach oben entgegen der Kraft der Druckfeder 152 verschoben. Die Rastnuten 157, 158 geben die Rastkugeln 138, 139 frei. Sobald diese benachbart zu den Tiefnuten 161, 162 stehen, treten sie in diese radial nach innen ein, verschoben durch die Arretiernuten 136, 137. Dadurch wird die Spannhülse 134 gegenüber der Hubstange 118 entriegelt und kann sich in ihre Spannposition zurückbewegen. Dabei stütz sich die obere Stirnfläche 143 des Kragens 142 axial an den Sägeblattnasen 168, 169 ab. Die Kegelglokken 181 bis 184 werden über das sich im Zentrierschlitz abstützende Sägeblatteinspannende 123 axial gegen die Kegelflächen 185 bis 188 der Stirnseite 132 verschoben und gleiten an diesen auf. Dabei werden diese gemeinsam, wie bei der Kegelglocke 182' gezeigt, radial nach innen in ihre Spannposition bewegt. Dadurch wird das Sägeblatt 122 großflächig und besonders sicher gegen Torsion und Flattern von der Spannzange 156 gespannt.

## Patentansprüche

1. Stichsägemaschine (10) mit einer Einrichtung (120) zum Spannen des Sägeblatts (122) am unteren Ende ihrer Hubstange (118), wobei eine mittels einem Verbindungselement (130, 135) durch Drehen axialverschieblich an der Hubstange (118) angeordnete Spannhülse (134) an ihrem freien unteren Ende einen nach innen ragenden, umlaufenden Kragen (142) mit einer Durchtrittsöffnung (144) und einem Radialschlitz (145) besitzt, wobei sich der Kragen (142) in der Spannposition axial gegen Nasen (168, 169) des Einspannendes des Sägeblatts (122) stützt und dieses damit in einer Aufnahme am unteren Endbereich der Hubstange (118) gegen ein federndes Zentrierstück (156) gedrückt hält, wobei die Hubstange (118) in einem oberen und unteren Hubstangenlager (26, 27) geführt ist, dadurch gekennzeichnet, daß die Hubstange (118) im unteren Hubstangenlager (27) mittels der Spannhülse (134) geführt wird, und wobei die Spannhülse (134), insbesondere gemeinsam mit dem Einspannende des Sägeblatts (122), beim Hub der Hubstange (118) das Hubstangenlager (27) durchläuft, und wobei sich das Verbindungselement (130, 135) oberhalb des unteren Hubstangenlagers (27) befindet.

2. Stichsägemaschine nach dem Oberbegriff des Anspruchs 1, dadurch gekennzeichnet, daß ein oberer Bereich der Spannhülse (134), insbesondere gemeinsam mit einer ihn umgreifenden Drehfeder (121), im Inneren des Getriebegehäuses (14) gelagert ist.

3. Stichsägemaschine nach Anspruch 1, 2 oder 3, dadurch gekennzeichnet, daß die Hubstange (118) den gleichen Außendurchmesser hat wie die Spannhülse (134).

4. Stichsägemaschine nach einem der vorhergehenden Ansprüche, dadurch gekennzeichnet, daß der Außendurchmesser der Spannhülse (134) größer ist als der Außendurchmesser der Hubstange (118), insbesondere um die doppelte Wandstärke der Spannhülse (134).

5. Stichsägemaschine nach einem der vorhergehenden Ansprüche, dadurch gekennzeichnet, daß das Zentrierstück (156) als Spannzange ausgestaltet ist und von der Spannhülse (134) konzentrisch umgriffen wird.

6. Stichsägemaschine nach einem der vorhergehenden Ansprüche, dadurch gekennzeichnet, daß die Spannhülse (134) mit Erreichen ihrer das Sägeblatt (122) freigebenden Drehposition, insbesondere gegenüber der Hubstange (118) durch Überrastmittel (136, 136; 138, 139), automatisch arretiert wird, wobei die Überrastmittel mittels des Sägeblatts (122), inbesondere bei dessen Einsetzen in die Spanneinrichtung (120), lösbar sind.

7. Stichsägemaschine nach einem der vorhergehenden Ansprüche, dadurch gekennzeichnet, daß als Überrastmittel mindestens eine zwischen der Spannhülse (134) und dem Zentrierstück (156) hin- und herverschiebbare Rastkugel (138, 139) dient.

8. Stichsägemaschine nach Anspruch 7, dadurch gekennzeichnet, daß die Rastkugel (138, 139) in einer Ausnehmung (140) der Hubstange (118) geführt ist und einer Nut (136, 137) der Spannhülse (134) und einer Rastnut (157, 158) des Zentrierstücks (156) im gleich zeitigen Eingriff sein kann.

9. Stichsägemaschine nach Anspruch 8, dadurch gekennzeichnet, daß die Rastnut (157, 158) des Zentrierstücks (156) in eine Tiefnut (161, 162) mit Schrägflächen (159, 160) übergeht.

10. Stichsägemaschine nach einem der vorhergehenden Ansprüche, dadurch gekennzeichnet, daß durch Verschieben des Zentrierstücks (156) mittels des Sägeblatteinspannen des die Rastkugel (138, 139) von der Nut (136, 137) der Spannhülse (134) in die Tiefnut (161, 162) des Zentrierstücks (156) tritt und damit die Arretierung der Spannhülse (134) löst.

## Claims

1. Jigsaw (10) comprising a device (120) for clamping the saw blade (122) at the bottom end of its stroke rod (118), a clamping sleeve (134), arranged on the stroke rod (118) so as to be axially displaceable by rotation by means of a connecting element (130, 135), having at its free bottom end an inwardly projecting, encircling collar (142) containing a passage opening (144) and a radial slot (145), the collar (142), in the clamping position, being supported axially against lugs (168, 169) of the clamping end of the saw blade (122) and thus holding the latter pressed against a spring-loaded centring piece (156) in a receptacle at the bottom end region of the stroke rod (118), the stroke rod (118) being guided in a top and a bottom stroke-rod bearing (26, 27), characterized in that the stroke rod (118) is guided in the bottom stroke-rod bearing (27) by means of the clamping sleeve (134), the clamping sleeve (134), in particular together with the clamping end of the saw blade (122), passing through the stroke-rod bearing (27) during the stroke of the stroke rod (118), and the connecting element (130, 135) being located above the bottom stroke-rod bearing (27).

2. Jigsaw according to the preamble of Claim 1, characterized in that a top region of the clamping sleeve (134), in particular together with a torsion spring (121) surrounding it, is mounted in the interior of the gear housing (14).

3. Jigsaw according to Claim 1, 2 or 3, characterized in that the stroke rod (118) has the same outside diameter as the clamping sleeve (134).

4. Jigsaw according to one of the preceding claims, characterized in that the outside diameter of the clamping sleeve (134) is greater than the outside diameter of the stroke rod (118), in particular by twice the wall thickness of the clamping sleeve (134).

5. Jigsaw according to one of the preceding claims, characterized in that the centring piece (156) is designed as a collet and is concentrically enclosed by the clamping sleeve (134).

6. Jigsaw according to one of the preceding claims, characterized in that the clamping sleeve (134), when it has reached its rotary position releasing the saw blade (122), is automatically arrested by overlapping catch means (136, 137; 138, 139), in particular relative to the stroke rod (118), the overlapping catch means being releasable by means of the saw blade (122), in particular when the latter is inserted into the clamping device (120).

7. Jigsaw according to one of the preceding claims, characterized in that at least one catch ball (138, 139) displaceable back and forth between the clamping sleeve (134) and the centring piece (156) serves as the overlapping catch means.

8. Jigsaw according to Claim 7, characterized in that the catch ball (138, 139) is guided in a recess (140) of the stroke rod (118) and can be simultaneously in engagement with a groove (136, 137) of the clamping sleeve (134) and a catch groove (157, 158) of the centring piece (156).

9. Jigsaw according to Claim 8, characterized in that the catch groove (157, 158) of the centring piece (156) passes into a deep groove (161, 162) having inclined surfaces (159, 160).

10. Jigsaw according to one of the preceding claims, characterized in that, by displacement of the centring piece (156) by means of the saw-blade clamping end, the catch ball (138, 139) passes from the groove (136, 137) of the clamping sleeve (134) into the deep groove (161, 162) of the centring piece (156) and thus releases the arresting of the clamping sleeve (134).

## Revendications

1. Scie sauteuse (10) avec un dispositif (120)servant à serrer la lame de scie (122) à l'extrémité intérieure de sa tige de montée (118), dans laquelle un manchon de serrage (134), qui est disposé au moyen d'un élément de liaison (130, 135) sur la tige de montée (118) de façon à coulisser axialement par rotation, possède à son extrémité inférieure libre une collerette (142) qui fait tout le tour, et fait saillie vers l'intérieur, avec une ouverture de passage (144) et une fente radiale (145), la collerette (142) prenant appui dans la position de serrage axialement contre des nez (168, 169) de l'extrémité de serrage de la (122) lame de scie et maintenant celle-ci de cette façon pressée dans un logement dans la zone terminale inférieure de la tige de montée (118) contre une pièce de centrage élastique (156), la tige de montée (118) passant dans un palier supérieur et dans un palier inférieur (26, 27) de tige de montée,
caractérisée an ce que
• l'on fait passer la tige de montée (118) dans le palier inférieur (27) de tige de montée au moyen du manchon de serrage (134),
• le manchon de serrage (134) passe à travers le palier (27) de tige de montée en particulier en même temps que l'extrémité de serrage de la lame de scie (122), lors de la montée de la tige de montée (118), et
• l'élément de liaison (130, 135) se trouve au dessus du palier intérieur (27) de la tige de montée.

2. Scie sauteuse selon le préambule de la revendication 1,
caractérisée an ce qu'
une zone supérieure du manchon de serrage (134) est montée, en particulier en même temps que qu'un ressort de torsion (121) qui l'entoure, à l'intérieur du carter de la transmission (14).

3. Scie sauteuse selon la revendication 1, 2 ou 3,
caractérisée an ce que
la tige de montée (118) a le même diamètre extérieur que le manchon de serrage (134).

4. Scie sauteuse selon l'une des revendications précédentes,
caractérisée en ce que
le diamètre extérieur du manchon de serrage (134) est plus grand que le diamètre extérieur de la tige de montée (118), en particulier du double de l'épaisseur de la paroi du manchon de serrage (134).

5. Scie sauteuse selon l'une des revendications précédentes,
caractérisée en ce que
la pièce de centrage (156) est constituée sous la forme d'une pince de serrage et est entourée par le manchon de serrage (134) de façon concentrique.

6. Scie sauteuse selon l'une des revendications précédentes,
caractérisée en ce que
le manchon de serrage (134) est automatiquement bloqué en atteignant sa position de rotation libérant la lame de scie (122), en particulier par rapport à la tige de montée (118), par des moyens s'encliquetant dessus (136, 137, 138, 139), les moyens d'encliquetage étant amovibles au moyen de la lame de scie (122), en particulier lors de son insertion dans le dispositif de serrage (120).

7. Scie sauteuse selon l'une des revendications précédentes,
caractérisée en ce que
l'on utilise comme moyens d'encliquetage au moins une bille d'encliquetage (138, 139) pouvant aller et venir entre le manchon de serrage (134) et la pièce de centrage (156).

8. Scie sauteuse selon la revendication 7,
caractérisée en ce qu'
• on fait passer la bille d'encliquetage (138, 139) dans un évidement (140) de la tige de montée (118), et
• elle peut être en prise simultanée avec une rainure (136, 137) du manchon de serrage (134) et une rainure d'encliquetage (157, 158) de la pièce de centrage (156).

9. Scie sauteuse selon la revendication 8,
caractérisée en ce que
la rainure d'encliquetage (157, 158) de la pièce de centrage (156) se transforme en une rainure profonde (161, 162) avec des faces obliques (159, 160).

10. Scie sauteuse selon l'une des revendications précédentes,
caractérisée en ce que
en faisant coulisser la pièce de centrage (156) au moyen de l'extrémité de serrage de la lame de scie la bille d'encliquetage (138, 139) passe de la rainure (136, 137) du manchon de serrage (134) sans la rainure profonde (161, 162) de la pièce de centrage (156) et libère de cette façon le blocage du manchon de serrage (134).
